# EUROPÄISCHE PATENTSCHRIFT

(11) **EP 2 030 828 B1**
(45) Veröffentlichungstag und Bekanntmachung des Hinweises auf die Patenterteilung: **10.10.2012**
(21) Anmeldenummer: 08090008.7
(22) Anmeldetag: 19.08.2008
(51) Int. Cl.: B60K 37/06, G06F 3/01

(54) **Multimodales Bediensystem und Verfahren zum Bedienen von Komponenten und Funktionen in einem Kraftfahrzeug**
Multimodal operating system and method to operate components and functions in a vehicle
Système de commande multimodal et procédé de commande de composants et de fonctions dans un véhicule

(30) Priorität: 24.08.2007 DE 102007040288
(43) Veröffentlichungstag der Anmeldung: 04.03.2009
(73) Patentinhaber: Volkswagen Aktiengesellschaft, 38440 Wolfsburg (DE)
(72) Erfinder: Wäller, Christoph, 38102 Braunschweig (DE); Bachfischer, Katharina, 38440 Wolfsburg (DE); Bohnenberger, Thorsten, 38122 Braunschweig (DE)
(74) Vertreter: Patentanwälte Bressel und Partner

(56) Entgegenhaltungen:
- EP-A1- 0 591 044
- EP-A2- 1 069 496
- WO-A1-2006/119788
- US-A1- 2005 197 843

## Beschreibung

Die Erfindung betrifft ein Bediensystem für ein Kraftfahrzeug sowie ein Verfahren zum Bedienen von Komponenten und Funktionen an einem Kraftfahrzeug.

Angesichts stetig steigender Funktionsumfänge von Fahrerinformations- und Fahrerassistenzsystemen wird eine Bedienung für einen Nutzer im Kraftfahrzeug immer komplexer. Um eine Überforderung der Nutzer zu vermeiden, ist es wesentlich, Bediensysteme und Verfahren, die eine Mensch-Maschine-Kommunikation oder -Schnittstelle umsetzen, so auszugestalten, dass eine Komplexität und Dauer, die für Bedienvorgänge benötigt wird, reduziert werden.

Für einige Fahrzeugsysteme ist es bereits heute bekannt, multimodale Eingaben, d.h. Eingaben über unterschiedlich ausgebildete Eingabeeinheiten, zu erfassen. Beispielsweise gibt es Bediensysteme in Kraftfahrzeugen, die sowohl eine Sprecherkennung als auch haptisch betätigbare Bedienelemente umfassen, über die ein- und dieselbe Funktion oder ein- und dieselbe Komponente bedient werden können. Je nach Wahl des Nutzers kann ein Bedienbefehl über einen gesprochenen Befehl oder über eine haptische Betätigung eines Bedienelements eingegeben werden. Ein Beispiel ist in der EP 0591 044 A1 beschrieben.

Aus der WO 20061119788A1 (beinhaltet die Merkmale der unebhägigen Ansprüche 1 und 11) ist ein Verfahren zum Betreiben eines Kraftfahrzeugs mit einer Vielzahl an Funktionssystemen bekannt, bei dem ein Satz an Profilvorschriften in einem Speichermittel des Kraftfahrzeugs abgelegt wird, und das zumindest eine Funktionssystem entsprechend diesem Satz an Profilvorschriften konfiguriert wird. Dort ist beschrieben, dass ein Satz an Regelvorschriften in einem Speichermittel des Kraftfahrzeugs abgelegt wird. Der Satz an Profilvorschriften wird einer Regelauswerteeinrichtung als Eingangsdaten zugeführt, wobei die Regelauswerteeinrichtung die Profilvorschriften anhand des Satzes an Regelvorschriften auswertet. Die Konfiguration des zumindest einen Funktionssystems wird anhand des Ergebnisses der Auswertung vorgenommen.

Aufgabe der Erfindung ist es, multimodale Bediensysteme und Verfahren so zu verbessern, dass eine schnellere züglgere Bedienung möglich ist und auch komplexere Bedienzusammenhänge für einen Benutzer auf einfache Weise bedienbar bleiben.

Die Aufgabe wird erfindungsgemäß durch ein Bediensystem mit den Merkmalen des Patentanspruchs 1 sowie ein Verfahren zum Bedienen von Komponenten und/oder Funktionen in einem Kraftfahrzeug mit den Merkmalen des Patenanspruchs 11 gelöst. Vorteilhafte Ausgestaltungen der Erfindung ergeben sich aus den Unteransprüchen.

Hierbei wird ein Bediensystem für ein Kraftfahrzeug vargeschlagen, welches mehrere unterschiedlich modale Erfassungseinrichtungen zum Erfassen von Betätigungshandlungen mindestens eines Nutzers des Kraftfahrzeugs und Ableiten zugeordneter Bedienhandlungen, mindestens eine Ausgabeeinrichtung zum Ausgeben von Informationen an den mindestens einen Nutzer, eine mit den Erfassungseinrichtungen und der mindestens einen Ausgabeeinrichtung verknüpfte Steuereinrichtung umfasst, die einen Informationsmanager zum Ableiten und Erzeugen von den Bedienhandlungen zugeordneten Steuerbefehlen und Informationsinhalten umfasst, die für eine Ausgabe über die mindestens eine Ausgabeeinrichtung vorgesehen sind, wobei zusätzlich ein Kommunikationsinterpreter vorgesehen ist, der aus den beim Erfassen der Betätigungshandlungen aufgenommenen Informationen implizit vermittelte Nutzerzustandsinformationen ableitet und auswertet und dem Informationsmanager bereitstellt. Im Folgenden wird eine durch den Nutzer ausgeführte aktive Handlung als Betätigungshandlung bezeichnet. Eine Hand oder ein anderes Körperteil, welches diese Betätigungshandlung ausführt, wird als Betätigungselement bezeichnet. Die von dem Bediensystem erfasste Handlung wird hingegen als Bedienhandlung bezeichnet. Betätigt ein Nutzer beispielsweise einen Tastschalter, so wird von der Erfassungseinrichtung diese Bedienhandlung erfasst. Hierbei handelt es sich um eine haptisch ausgeführte Betätigungshandlung, die somit als haptische Bedienhandlung erfasst wird. Multimodale Erfassungseinrichtungen sind solche, die Betätigungshandlungen des Nutzers auf verschiedene Art und Weise erfassen. Beispielsweise können neben einer haptischen Erfassung eine Spracherkennung, eine Annäherungserkennung, eine Positionsbestimmung im Raum einzelner Körperteile, eine Blickverfolgung usw. durchgeführt werden. Einzelne Erfassungsmodalitäten, beispielsweise eine haptische Erfassung, kann in weitere Untermodalitäten untergliedert sein. So kann ein Streifen mit einem Finger über ein Touchpad als ein Erfassungsmodus von einem drückenden Modus auf einen Tastschalter unterschieden werden. Durch das Zufügen eines Kommunikationsinterpreters, der aus den beim Erfassen der Betätigungshandlung aufgenommenen Informationen implizit vermittelte Nutzerzustandsinformationen ableitet und auswertet und den Informationsmanager bereitstellt, kann dieser besser auf die Bedürfnisse des Nutzers eingehen. In dem beschriebenen Beispiel können beispielsweise als implizite Informationen eine Sprechgeschwindigkeit, eine Tonhöhe oder auch ein Berührdruck oder eine Berührdauer ausgewertet und analysiert werden. In vielen Situationen kann hierdurch eine Bedienintention des Nutzers abgeleitet werden. Ebenso kann es möglich sein, wenn beispielsweise eine dreidimensionale Positionserfassungseinrichtung für Körperteile des Nutzers verwendet wird, die in der Lage ist, beispielsweise einfache Gesten auszuwerten, welche als explizite Bedienhandlungen erfasst werden, anhand der Koordinaten, der Hand des Nutzers und/oder eines Bewegungsablaufs den Nutzer zu identifizieren. Solche Informationen können von dem Kommunikationsinterpreter dem Informationsmanager bereitgestellt werden, der darüber beispielsweise Zugriffsrechte auf bestimmte Funktionen ableiten kann. Insgesamt wird durch den Einsatz des Kommunikationsinterpreters eine bessere Ausnutzung der bei einer durch den Nutzer ausgeführten Betätigungshandlung erfassten Informationen erreicht. Hierdurch können in vielen Bediensituationen Betätigungshandlungen seitens des Nutzers eingespart werden, die ansonsten als explizite Betätigungshandlungen erforderlich waren, um diese Informationen zu erfassen.

Um weitere komfortable Bedienmöglichkeiten zuschaffen, ist bei einer Ausführungsform vorgesehen, dass die Steuereinrichtung einen Modalitätsmanager zum Ableiten mindestens einer multimodalen Bedienhandlung mittels einer Verknüpfung unterschiedlich modal erfasster expliziter Bedienhandlungen umfasst, denen einzeln keine oder eine andere Bedienhandlung zugeordnet sind. Eine multimodale Bedienhandlung ist eine solche, die aus zwei unterschiedlich modal erfassten Bedienhandlungen, welche der Nutzer durch explizite, d.h. willentlich vorgenommene, Betätigungshandlungen ausgelöst hat, abgeleitet ist. Berührt ein Benutzer beispielsweise einen in einem Navigationssystem dargestellten Ort auf einer Anzeigefläche, die als Touchscreen ausgebildet ist, und spricht zeitlich korreliert hiermit den Satz aus: "Bitte nähere Informationen ausgeben", so kann aus diesen beiden Betätigungshandlungen, dem Berühren der Anzeigefläche und dem Aussprechen des Satzes, die unterschiedlich modal jeweils als Bedienhandlungen erfasst werden, eine multimodale Bedienhandlung abgeleitet werden, nämlich die Bedienhandlung Abrufen von Informationen über den dargestellten Ort, der an der Berührposition dargestellt ist.

Bei einer bevorzugten Weiterbildung der Erfindung ist vorgesehen, dass die Nutzerzustandsinformationen zusätzlich von einem Präsentationsmanager ausgewertet werden, der eine konkrete Ausgabe der zu vermittelnden Informationsinhalte steuert. Während der Informationsmanager festlegt, welche Informationen dem Nutzer bereitgestellt und ausgegeben werden sollen, entscheidet der Präsentationsmanager, auf welche Art und Weise die Informationen ausgegeben werden und gegebenenfalls auch zu welchem Zeitpunkt dies erfolgen soll. In dem oben angegebenen Beispiel kann beispielsweise anhand der Sprechgeschwindigkeit oder einer Tonhöhe des gesprochenen Satzes ermittelt werden, ob der Fahrer sich in einem eher ruhigen oder erregten Gemütszustand befindet. Abhängig hiervon kann beispielsweise entschieden werden, ob die Informationen auf einer Anzeigefläche dargestellt oder als gesprochene Informationen oder sogar sowohl als grafische Anzeige als auch als gesprochene Worte ausgegeben werden sollen. Ist der Fahrer eher in einem erregten Gemütszustand, so kann zusätzlich die ausgegebene Information durch den Präsentationsmanager selektiert und eingegrenzt werden, so dass nur die wesentlichen Informationen ausgegeben werden.

Die unterschiedlichen Erfassungseinrichtungen umfassen beispielsweise haptische Bedienelemente (Schalter, Drehsteller, Drehdrücksteller, Schieberegler, Trackballs, Joysticks, Touchpads, Touchscreens usw.), akustische Erfassungs- und/oder Auswerteeinheiten (Mikrofon, Spracherkennung, Frequenzanalysierer usw.), Blickverfolgungseinrichtungen (beispielsweise auf Kamerabasis), berührungslose Positionsbestimmungseinheiten, 3D-Positionsbestimmungseinheiten, Annäherungssensoren, Fahrer-/Beifahrererkennungssysteme, Gestenerkennungseinrichtungen usw. Um dem Präsentationsmanager die Möglichkeit zu geben, unterschiedliche Ausgabewege zu wählen, ist bei einer bevorzugten Ausführungsform vorgesehen, dass mindestens eine weitere Ausgabeeinrichtung vorgesehen ist und die Ausgabeeinrichtung und/oder die weitere Ausgabeeinrichtung Warnlampen, Sirenen, Hupen, haptische Vibratoren, frei programmierbare Anzeigeflächen und/oder Audioausgabesysteme (Verstärker, Lautsprecher, Kopfhörer usw.) umfassen.

Bei einer bevorzugten Ausführungsform ist vorgesehen, dass der Präsentationsmanager ausgebildet ist, die zur Vermittlung vorgesehene Information abhängig von den Nutzerzustandsinformationen zu selektieren. Bei einer anderen Ausführungsform ist der Präsentationsmanager ausgebildet, abhängig von der Nutzerzustandsinformation die Ausgabeeinrichtung und/oder die weitere Ausgabeeinrichtung für die Ausgabe der zu vermittelnden Information anzusteuern.

Bei wieder einer weiteren Ausführungsform ist vorgesehen, dass die Nutzerzustandsinformationen eine Bedienintention umfassen und eine grafische Darstellung der Informationen so angepasst erfolgt, dass die mit der Bedienintention verknüpften Informationen für eine verbesserte Wahrnehmbarkeit dargestellt sind. Beispielsweise können die Informationen vergrößert, zentraler oder hervorgehoben dargestellt werden. Eine Hervorhebung kann beispielsweise mittels farbiger Markierung, Fettdruck oder Ähnliches erfolgen.

Bei einer Ausführungsform der Erfindung ist vorgesehen, dass die Vermittlung der Informationen hinsichtlich ihres Umfangs und/oder ihres Ausgabezeitpunkts abhängig von den Nutzerzustandsinformationen erfolgt. Ergibt es sich, dass der Nutzer beispielsweise in einem stark erregten oder angespannten Zustand ist, so kann es vorteilhaft sein, die Informationen nicht zu dem Zeitpunkt auszugeben, zu dem sie von dem Informationsmanager bereitgestellt werden, sondern, sofern sie nicht sicherheitsrelevante Informationen umfassen, zeitverzögert zu einem Zeitpunkt ausgegeben werden, zu dem der Nutzer aufnahmebereiter ist. Ebenso kann es vorteilhaft sein, die auszugebenden Informationen einzuschränken oder vollständig auszugeben, je nach Zustand des Nutzers.

Um eine verbesserte Auswertung der implizit vermittelten Informationen zu ermöglichen, ist bei einer bevorzugten Weiterbildung der Erfindung vorgesehen, dass der Kommunikationsmanager zusätzlich einen Nutzungskontext berücksichtigt und hierfür beispielsweise Signale von Umfeldsensoren erfasst und in eine Auswertung einbezieht. Bei den Umfeldsensoren kann es sich um beliebige Sensoren handeln, die einen Fahrzeugzustand und/oder einen Zustand der Fahrzeugumgebung erfassen. Als Umfeldsensoren werden in diesem Sinne auch beispielsweise Signale einer Uhr oder eines anderen Fahrzeugsystems angesehen, die einen Zustand des Fahrzeugs oder einer Fahrsituation näher charakterisieren. Der Nutzungskontext umfasst zusätzlich einen Anzeige- und/oder Bedienkontext des Bediensystems selbst.

Ist dem Kommunikationsinterpreter ein Nutzungskontext bekannt, so kann er die implizit vermittelten Informationen präziser auswerten.

Die Merkmale des erfindungsgemäßen Verfahrens weisen dieselben Vorteile wie die entsprechenden Merkmale des erfindungsgemäßen Bediensystems auf.

Nachfolgend wird die Erfindung anhand von Ausführungsbeispielen unter Bezugnahme auf eine Zeichnung näher erläutert. Hierbei zeigen:
- Fig. 1: ein Bediensystem nach dem Stand der Technik;
- Fig. 2: ein einfaches multimodales Bediensystem mit einem Kommunikationsinterpreter;
- Fig. 3: eine bevorzugte Ausführungsform eines multimodalen Bediensystems; und
- Fig. 4: ein schematisches Ablaufdiagramm eines Verfahrens zum Bedienen von Komponenten und/oder Funktionen in einem Kraftfahrzeug.

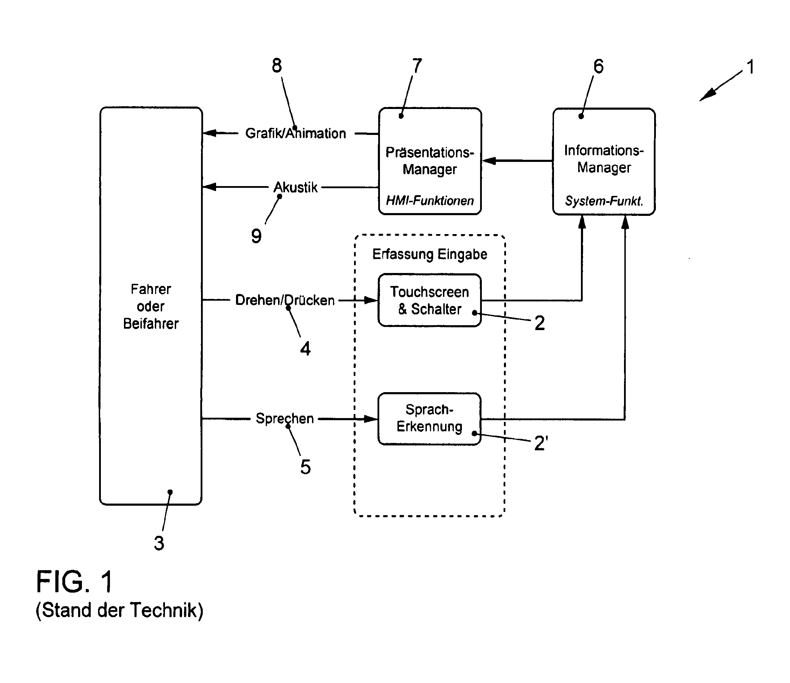

In Fig. 1 ist ein Bediensystem für ein Kraftfahrzeug und dessen Wechselwirkung mit Nutzern schematisch dargestellt. Das Bediensystem 1 umfasst unterschiedlich modale Erfassungseinrichtungen 2, 2'. Eine (2) der Erfassungseinrichtungen 2, 2' ist beispielsweise ein haptisches Bedienelement, insbesondere ein Touchscreen oder ein Schalter. Eine hiervon modal verschiedene Erfassungseinrichtung 2' ist beispielsweise als Spracherkennungseinheit ausgebildet. Mit diesen unterschiedlich modalen Erfassungseinrichtungen 2, 2' wechselwirkt ein Nutzer 3, der in der Regel ein Fahrer oder Beifahrer des Kraftfahrzeugs ist, über aktive explizit vorgenommene Betätigungshandlungen. Bei den haptischen Bedienelementen umfassen die Betätigungshandlungen ein Drehen, Drücken usw. Die Spracherkennungseinheit erkennt eine gesprochene Betätigungshandlung 5. Die unterschiedlich modalen Erfassungseinrichtungen erfassen eine Betätigungshandlung und ordnen sie einer Bedienhandlung, beispielsweise einem erkannten Sprachbefehl, zu. Ein Tastschalter erkennt beispielsweise als Bedienhandlung ein Niederdrücken des Tastschalters. Die erfassten bzw. zugeordneten Bedienhandlungen werden an einen Informationsmanager 6 weitergeleitet. Dieser leitet aus den Bedienhandlungen zugeordnete Steuerbefehle ab und erzeugt diese. Ist beispielsweise ein Drehschalter eines Gebläselüfters durch eine Betätigungshandlung des Nutzers verstellt worden, so ist die Bedienhandlung "Verstellen der Lüfterintensität" erfasst worden. Zu dieser Bedienhandlung gehört ein Steuerbefehl, der ausgegeben wird und den Entlüfter entsprechend steuert. Ebenso leitet der Informationsmanager Informationsinhalte ab, die an einen Präsentationsmanager 7 weitergegeben werden, der eine Ausgabe der Informationen in einer für den Nutzer 3 wahrnehmbaren Weise steuert. Dieser steuert beispielsweise eine Anzeige an, die als grafische Ausgabe eine Gebläseintensität ausgibt. Alternativ oder zusätzlich kann ein entsprechendes akustisches Signal 9 an den Nutzer 3 ausgegeben werden. Dieses einfache Bediensystem für ein Kraftfahrzeug kann zwar unterschiedlich modal Betätigungshandlungen, die ebenfalls unterschiedlich modal sein können, erfassen, jedoch ist dieses Bediensystem nicht ausgebildet, multimodale Bedienhandlungen zu erkennen und auszuwerten.

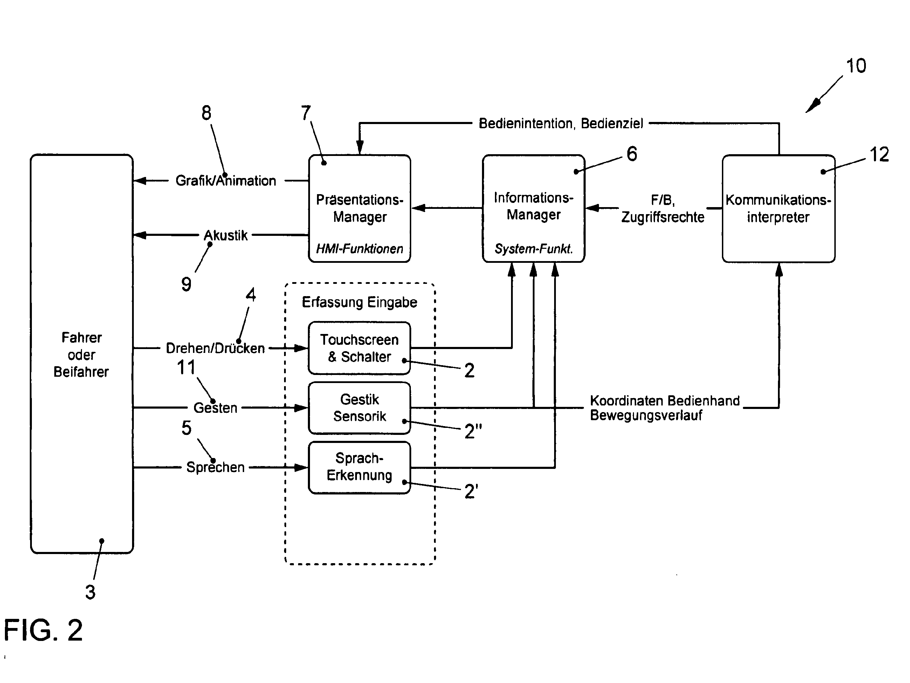

In Fig. 2 ist eine andere Ausführungsform eines Bediensystems 10 dargestellt. Gleiche oder ähnliche technische Merkmale sind mit identischen Bezugszeichen versehen. Die unterschiedlich modalen Erfassungseinrichtungen umfassen gegenüber der Ausführungsform nach Fig. 1 zusätzlich eine Erfassungseinrichtung 2" zum Erfassen von Gesten 11. Diese erfasst durch den Nutzer ausgeführte Betätigungshandlungen, die Gesten darstellen. Eine kreisende Bewegung einer Hand oder eines Fingers wird beispielsweise als eine Geste erkannt und als entsprechende Bedienhandlung erfasst. Diese wird an den Informationsmanager 6 weitergeleitet. Die Erfassungseinrichtung 2", mittels der Gesten erkannt werden, erfasst jedoch zusätzlich die Koordinaten der Hand. Diese Information wird an einen Kommunikationsinterpreter 12 weitergegeben. Dieser kann beispielsweise anhand der einzelnen Koordinaten und dem sich hieraus ergebenden Bewegungsablauf erkennen, von welcher Seite des Kraftfahrzeugs aus die Hand oder der Finger bewegt wurde, um die kreisende Geste (Betätigungshandlung) auszuführen. Hieran kann der Kommunikationsinterpreter beispielsweise eine Fahrer-/Beifahrererkennung vornehmen. Dieses stellt eine so genannte Nutzerzustandsinformation dar, da sie den Nutzer und/oder dessen Zustand näher charakterisiert. Der Informationsmanager kann diese Information beispielsweise verwenden, um fahrer-/beifahrerbezogene Systeme gezielt anzusteuern oder Zugriffsrechte für bestimmte Funktionen zu verwalten. Wir die Geste beispielsweise im Kontext einer Sitzheizungsbedienung ausgeführt, so kann über die Fahrer-/Beifahrererkennung festgelegt werden, wessen Sitzheizung, die des Fahrers oder die des Beifahrers, bedient werden soll. Findet eine solche Geste beispielsweise in einem Nutzungskontext zur Bedienung eines Videosystems statt, so kann über die Fahrer-/Beifahrererkennung ein Zugriff auf bestimmte Funktionen zum Starten einer Videowiedergabe während der Fahrt geregelt werden. Anhand der Koordinaten kann jedoch auch beispielsweise bei einer Annäherung an eine als Touchscreen ausgebildete haptische Erfassungseinrichtung 2 eine Bedienintention und/oder ein Bedienziel abgeleitet werden. Der Präsentationsmanager 7 kann daraufhin eine Anzeige, beispielsweise von virtuellen Bedienelementen, für eine optimale Bedienung anpassen.

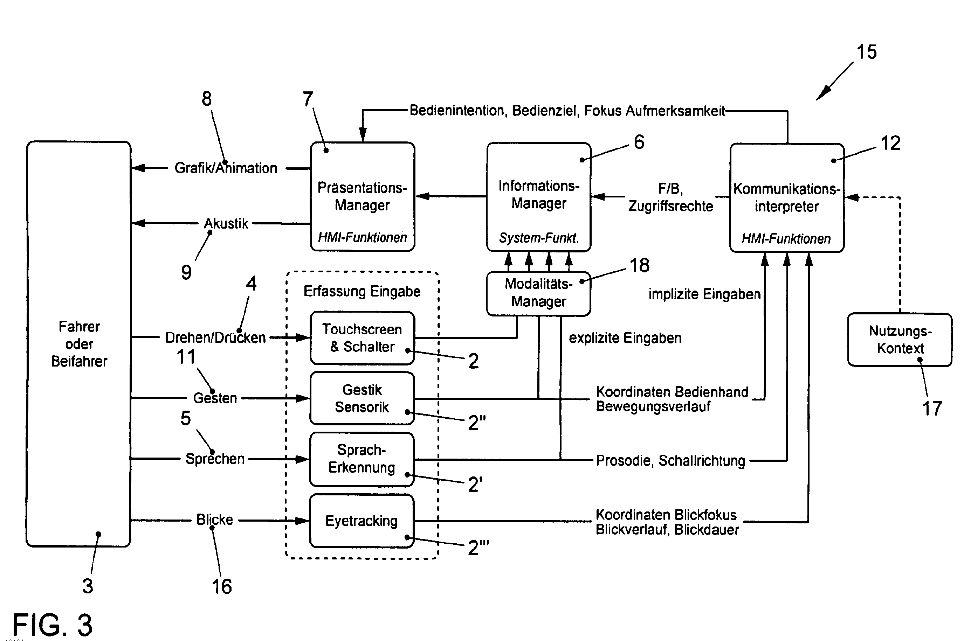

In Fig. 3 ist eine bevorzugte Ausführungsform eines Bediensystems 15 dargestellt. Ähnliche oder gleiche technische Merkmale sind erneut mit identischen Bezugszeichen versehen. Das in Fig. 3 dargestellte Bediensystem 15 umfasst zusätzliche unterschiedlich modale Erfassungseinrichtungen 2"', die beispielsweise als Eyetracker ausgebildet sind. Mit einer solchen zusätzlichen als Eyetracker ausgebildeten Erfassungseinrichtung 2''' können beispielsweise Blicke erfasst werden. Eine explizite Vornahme einer Betätigungshandlung durch Blickzuwendung und/oder -abwendung ist für einen Nutzer gegenwärtig noch so ungewohnt, dass eine Erfassung der Blickrichtung als explizite Bedienhandlung derzeit noch nicht vorgesehen ist. Grundsätzlich wäre jedoch eine solche auch möglich. Entscheidend kann jedoch die Blickrichtung von dem Kommunikationsinterpreter 12 ausgewertet werden, um einen Aufmerksamkeitsfokus, eine Bedienintention oder ein Bedienziel zu ermitteln. Dieses kann insbesondere von dem Präsentationsmanager vorteilhaft eingesetzt werden, um eine Interaktion mit dem Nutzer 3 zu optimieren. Eine noch verbesserte Auswertung der impliziten Informationen, die der Nutzer 3 beim Ausführen der unterschiedlichen Betätigungshandlungen, Drehen/Drücken 4, Sprechen 5, Ausführen von Gesten 11 und Blicken 16 preisgibt, ist durch den Kommunikationsinterpreter 12 möglich, wenn dieser zusätzlich einen Nutzungskontext 17 erfasst und auswertet. Dieser kann beispielsweise mittels Umfeldsensoren erfasst werden, die Informationen über eine Fahrsituation und/oder ein Fahrumfeld und/oder einen Fahrzeugzustand vermitteln. Ebenso umfasst der Nutzungskontext einen aktuellen Anzeige- und Bedienkontext des Bediensystems, wenn dieses beispielsweise eine als Touchscreen ausgebildete Anzeige- und Bedieneinrichtung umfasst, auf der unterschiedliche virtuelle Bedienelemente in unterschiedlichen Bedienkontexten angezeigt werden. Virtuelle Bedienelemente sind solche, die auf der Anzeigefläche des Touchscreens dargestellt werden und über eine berührende Betätigungshandlung betätigt werden können.

Das Bediensystem 15 umfasst ferner einen Modalitätsmanager 18, der aus unterschiedlich modal erfassten Bedienhandlungen eine multimodale Bedienhandlung ableitet. Eine solche ist eine durch den Nutzer explizit gewollte Betätigung, die unterschiedlich modale Betätigungshandlungen bzw. unterschiedlich modal erfasste Betätigungshandlungen erfordert, die dann einer Bedienhandlung zugeordnet werden. Ein Beispiel für eine multimodale Bedienhandlung ist eine so genannte Point-to-Talk- Betätigungshandlung, bei der der Nutzer beispielsweise auf ein Objekt weist und einen von mehreren Sprachbefehlen ausgibt. Weist der Nutzer beispielsweise in einer Navigationskartendarstellung auf einen Punkt von Interesse, so kann er über einen Sprachbefehl die Art der Informationen auswählen, die ihm zu diesem Punkt von Interesse ausgegeben werden sollen.

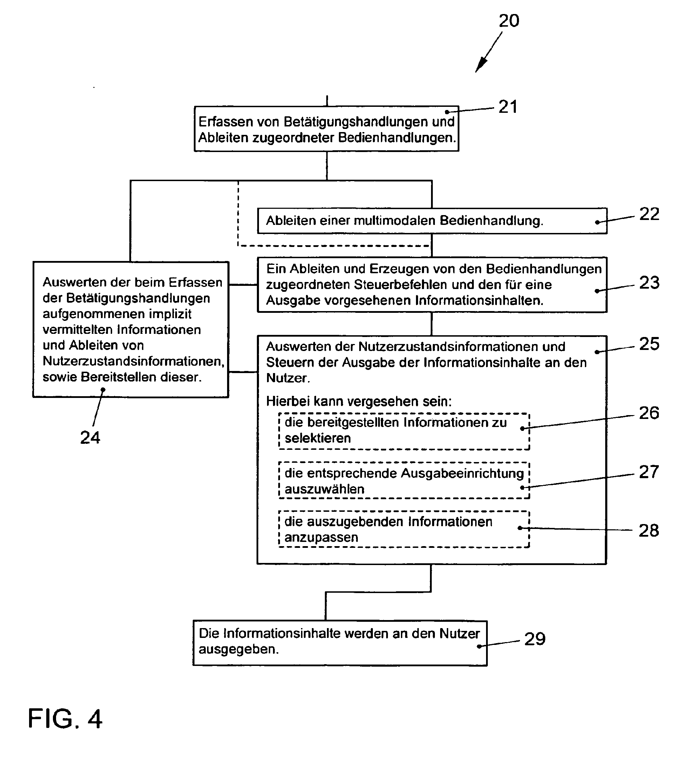

In Fig. 4 ist schematisch ein Blockdiagramm eines Verfahrens 20 zum Bedienen von Komponenten und/oder Funktionen in einem Fahrzeug dargestellt. Zunächst ist ein Erfassen von Betätigungshandlungen von Nutzern des Kraftfahrzeugs und Ableiten zugeordneter Bedienhandlungen mittels mehrerer unterschiedlich modaler Erfassungseinrichtungen vorgesehen 21. Anschließend erfolgt gegebenenfalls ein Ableiten mindestens einer multimodalen Bedienhandlung mittels einer Verknüpfung unterschiedlich modal erfasster expliziter Bedienhandlungen, denen einzeln keine oder andere Bedienhandlungen zugeordnet sind 22. Ein Ableiten und Erzeugen von den Bedienhandlungen zugeordneten Steuerbefehlen und Informationsinhalten, die für eine Ausgabe über die mindestens eine Ausgabeeinrichtung vorgesehen sind, wird mittels des Informationsmanagers vorgenommen 23. Zusätzlich wird mittels des Kommunikationsinterpreters aus den beim Erfassen der Betätigungshandlungen aufgenommenen Informationen implizit vermittelte Nutzerzustandsinformationen abgeleitet und ausgewertet und dem Informationsmanager bereitgestellt 25. Dieser nutzt diese Informationen beispielsweise zum Erzeugen der Steuerbefehle, beispielsweise in Situationen, in denen eine fahrer-/beifahrerabhängige Steuerung ausgeführt wird. Ebenso können die Nutzerzustandsinformationen, die der Kommunikationsinterpreter bereitstellt, verwendet werden, um die auszugebenden Informationsinhalte zu beeinflussen. Die Nutzerzustandsinformationen werden auch von dem Präsentationsmanager ausgewertet, der das Ausgeben der Informationsinhalte an den Nutzer steuert 25. Hierbei kann vorgesehen sein, die bereitgestellten Informationen zu selektieren 26, die entsprechende Ausgabeeinrichtung auszuwählen 27 und/oder die auszugebenden Informationen anzupassen 28. Die Informationsinhalte werden an den Nutzer mittels einer Ausgabeeinrichtung ausgegeben 29.

Die beschriebenen Ausführungsformen haben lediglich beispielhaften Charakter. Es ergibt sich für den Fachmann, dass eine Vielzahl von Modifikationen möglich sind.

## Patentansprüche

1. Bediensystem (1, 10, 15) für ein Kraftfahrzeug umfassend:
mehrere unterschiedlich modale Erfassungseinrichtungen (2-2"') zum Erfassen von Betätigungshandlungen (4, 5, 11, 16) mindestens eines Nutzers des Kraftfahrzeugs und Ableiten zugeordneter Bedienhandlungen,
mindestens eine Ausgabeeinrichtung zum Ausgeben von Informationen an die Nutzer, eine mit den Erfassungseinrichtungen (2-2"') und der mindestens einen Ausgabeeinrichtung verknüpfte Steuereinrichtung, die
einen Informationsmanager (6) zum Ableiten und Erzeugen von den Bedienhandlungen zugeordneten Steuerbefehlen und Informationsinhalten umfasst, die für eine Ausgabe über die mindestens eine Ausgabeeinrichtung vorgesehen sind,
**dadurch gekennzeichnet, dass**
zusätzlich ein Kommunikationsinterpreter (12) vorgesehen ist, der aus den beim Erfassen der Betätigungshandlungen aufgenommenen Informationen Implizit unmittelbar beim Ausführen der Betätigungshandlung vermittelte Nutzerzustandsinformationen ableitet und auswertet und dem Informationsmanager bereitstellt.

2. Bediensystem (1, 10, 15) nach Anspruch 1, **dadurch gekennzeichnet, dass** die Steuereinrichtung einen Modalitätsmanager (18) zum Ableiten mindestens einer multimodale Bedienhandlung mittels einer Verknüpfung unterschiedlich modal erfasster expliziter Bedienhandlungen umfasst. denen einzeln keine oder eine andere Bedienhandlung zugeordnet sind.

3. Bediensystem (9, 10, 15) nach Anspruch 1 oder 2, **dadurch gekennzeichnet, dass** die Steuereinrichtung zusätzlich einen Präsentationsmanager (7) zum Steuern der konkreten Ausgabe der zu vermittelnden Informationen in Ahängigkeit der Nutzerzustandsinformationen umfasst.

4. Bediensystem (1, 10, 15) nach einem der vorangehenden Ansprüche, **dadurch gekennzeichnet, dass** die mehreren Erfassungseinrichtungen (2, 2', 2", 2"') haptische Bedienelemente (Schatter, Drehsteller, Drehdrücksteller, Schieberegler, Trackballs, Joysticks, Touchpads, Touchscreen usw.), akustische Erfassungs- und/oder Auswerteeinheiten (Mikrofon, Spracherkennung, Frequenzanalysierer usw.). Blickverfolgungseinrichtungen (auf Kamersbasis), berührungslose Positiansbestimmungseinheiten, vorzugsweise 3D-Positionsbestimmungseinheit, Annäherungssensoren, Fahrer-/ Beifahrererkennungssysteme und/oder Gestenerkennungseinrichtungen umfassen.

5. Bediensystem (1, 10, 15) nach einem der vorangehenden Ansprüche, **dadurch gekennzeichnet, dass** mindestens eine weitere Ausgabeeinrichtung vorgesehen ist und die Ausgabeeinrichtung und/oder die weitere Ausgabeeinrichtung Warnlampen, Sirenen, Hupen, haptische Vibratoren, frei programmierbare Anzeigeflächen und/oder Audioausgabesysteme (Verstärker, Lautsprecher, Kopfhörer, usw.) umfassen.

6. Bediensystem (1, 10, 15) nach einem der vorangehenden Ansprüche, **dadurch gekennzeichnet, dass** der Präsentationsmanager (7) ausgebildet ist, die zur Vermittlung vorgesehene Information abhängig von den Nutzerzustandsinformationen zu selektieren.

7. Bediensystem (1, 10, 15) nach einem der vorangehenden Ansprüche, **dadurch gekennzeichnet, dass** der Präsentationsmanager ausgebildet ist, abhängig von der Nutzerzustandsinformation die Ausgabeeinrichtung und/oder die weitere Ausgabeeinrichtung für die Ausgabe der zu vermittelnden Informationen anzusteuern.

8. Bediensystem (1, 10, 15) nach einem der vorangehenden Ansprüche, **dadurch gekennzeichnet, dass** die Nutzerzustandsinformationen eine Bedienintention umfassen und eine grafische Darstellung der Informationen so angepasst erfolgt, dass die mit der Bedienintention verknüpften Informationen für eine verbesserte Wahrnehmbarkeit dargestellt sind (größer zentraler hervorgehoben (mittels farbiger Markierung, Fettdruck etc.)).

9. Bediensystem (1, 10, 15) nach einem der vorangehenden Ansprüche, **dadurch gekennzeichnet, dass** die Vermittlung der Informationen hinsichtlich ihres Umfangs und oder Ihres Ausgabezeitpunkts abhängig von den Nutzerzustandsinformationen erfolgt.

10. Bediensystem (1, 10, 15) nach einem der vorangehenden Ansprüche, **dadurch gekennzeichnet, dass** der Kommunikationsmanager (12) zusätzlich einen Nutzungskontext, der insbesondere mittels Signalen von Umfeldsensoren erfasst wird, in eine Auswertung einbezieht.

11. Verfahren zum Bedienen von Komponenten und/oder Funktionen in einem Kraftfahrzeug, umfassend die Schritte:
Erfassen von Betätigungshandlungen von Nutzern des Kraftfahrzeugs und Ableiten zugeordneter Bedienhandlungen mittels mehrerer unterschiedlich modaler Erfassungseinrichtungen (2-2"').
Ableiten und Erzeugen von den Bedienhandlungen zugeordneten Steuerbefehlen und Informationsinhalten, die für eine Ausgabe über die mindestens eine Ausgabeeinrichtung vorgesehen sind, mittels eines Informationsmanagers (6) und Ausgeben der Informationsinhalte an die Nutzer mittels mindestens einer Ausgabeeinrichtung,
**dadurch gekennzeichnet, dass**
zusätzlich mittels eines Kommunikationsinterpreters (12) aus den beim Erfassen der Betätigungshandlungen aufgenommenen Informationen implizit unmittelbar beim Ausführen der Betätigungshandlung vermittelte Nutzerzustandsinformationen abgeleitet und ausgewertet und dem Informationsmanager bereitstellt werden.

12. Verfahren nach Anspruch 11, **dadurch gekennzeichnet, dass** mindestens eine multimodale Bedienhandlung mittels einer Verknüpfung unterschiedlich modal erfasster expliziter Bedienhandlungen abgeleitet wird, denen einzeln keine oder eine andere Bedienhandlung zugeordnet sind.

13. Verfahren nach Anspruch 11 oder 12, **dadurch gekennzeichnet, dass** die Nutzerzustandsinformationen zusätzlich von einem Präsentationsmanager (7) ausgewertet werden, der eine konkrete Ausgabe der zu vermittelnden Informationsinhalte steuert.

14. Verfahren nach Anspruch 11 oder 13, **dadurch gekennzeichnet, dass** die Betatigungshandlungen mittels haptischer Bedienelemente (Schalter, Drehsteller, Drehdrücksteller, Schieberegler, Trackballs, Joysticks, Touchpads, Touchscreen usw.). akustischer Erfassungs- und/oder Auswerteeinhelten (Mikrofon, Spracherkennung, Frequenzanalysierer usw.), Blickverfolgungseinrichtungen (auf Kamerabasis), berührungslos messender Positionsbestimmungseinheiten. 3D-Positionsbestimmungseinheiten, Annäherungssensoren, Fahrer-/Beifahrererkennungssystemen und/oder Gestenerkennungseinrichtungen erfasst werden.

15. Verfahren nach einem der Ansprüche 11 bis 14, **dadurch gekennzeichnet, dass** die zu vermittelnden Informationen über die Ausgabeeinrichtung und/oder eine weitere Ausgabeeinrichtung abhängig von den Nutzerinformatiorien ausgegeben werden, wobei die Ausgabeeinrichtung und/oder eine weitere Ausgabeeinrichtung Wamlampen, Sirenen, Hupen, haptische Vibratoren, frei programmierbare Anzeigeflächen und/oder Audioausgabesysteme (Verstärker, Lautsprecher, Kopfhörer, usw.) umfassen.

16. Verfahren nach einem der Ansprüche 11 bis 15, **dadurch gekennzeichnet, dass** der Präsentationsmanager (7) die zur Vermittlung vorgesehene Information abhängig von den Nutzerzustandsinformationen selektiert.

17. Verfahren nach einem der Ansprüche 11 bis 16, **dadurch gekennzeichnet, dass** der Präsentationsmanager (7) abhängig von der Nutzerzustandsinformation die Ausgabeeinrichtung und/oder die weitere Ausgabeeinrichtung für die Ausgabe der zu vermittelnden Informationen ansteuert.

18. Verfahren nach einem der Ansprüche 11 bis 17, **dadurch gekennzeichnet, dass** der Kommunikationsmanager (12) eine Bedienintention ermittelt und den Nutzerzustandsinformationen zufügt und eine Ausgabe der zu vermittelnden Informationen, insbesondere eine grafische Darstellung der Informationen, durch den Präsentationsmanager (7) so angepasst wird, dass die mit der Bedienintention verknüpften Informationen für eine verbesserte Wahrnehmung ausgegeben, insbesondere dargestellt (größer zentraler hervorgehoben (mittels farbiger Markierung, Fettdruck etc.)), werden.

19. Verfahren nach einem der Ansprüche 11 bis 18, **dadurch gekennzeichnet, dass** der Präsentationsmanager (7) die Vermittlung der Informationen hinsichtlich ihres Umfangs und oder ihres Ausgabezeitpunkts abhängig von den Nutzerzustandsinformationen steuert.

20. Verfahren nach einem der Ansprüche 11 bis 19, **dadurch gekennzeichnet, dass** der Kommunikationsmanager zusätzlich einen Nutzungskontext, der insbesondere mittels Signalen von Umfeldsensoren erfasst wird, in eine Auswertung einbezieht.

## Claims

1. Operating system (1, 10, 15) for a motor vehicle, comprising:
a number of differently modal acquisition devices (2-2"') for acquiring actuating actions (4, 5, 11, 16) of at least one user of the motor vehicle and deriving associated operating actions,
at least one output device for outputting information to the users, a control device, linked to the acquisition devices (2-2"') and the at least one output device, which comprises
an information manager (6) for deriving and generating control commands and information contents, allocated to operating actions, which are provided for an output via the at least one output device,
**characterized in that**
additionally, a communication interpreter (12) is provided which implicitly immediately derives and evaluates and provides to the information manager user status information conveyed during the execution of the actuating action from the information recorded during the acquisition of the actuating actions.

2. Operating system (1, 10, 15) according to Claim 1, **characterized in that** the control device comprises a modality manager (18) for deriving at least one multi modal operating action by means of a linkage of explicit operating actions, acquired in different modal manners, to which no or another operating action are allocated individually.

3. Operating system (1, 10, 15) according to Claim 1 or 2, **characterized in that** the control device additionally comprises a presentation manager (7) for controlling the actual output of the information to be conveyed in dependence on the user status information.

4. Operating system (1, 10, 15) according to one of the preceding claims, **characterized in that** the number of acquisition devices (2, 2', 2", 2"') comprise haptic operating elements (switches, rotary actuators, rotary resetters, sliding regulators, track balls, joysticks, touch pads, touch screens, etc.), acoustic acquisition and/or evaluating units (microphone, voice recognition, frequency analyser, etc.),
(camera-based) eye tracking devices, contactless positioning units, preferably 3D positioning unit, proximity sensors, driver/co-driver detection systems and/or gesture detection devices.

5. Operating system (1, 10, 15) according to one of the preceding claims, **characterized in that** at least one further output device is provided and the output device and/or the further output device comprise warning lamps, sirens, horns, haptic vibrators, freely programmable display areas and/or audio output systems (amplifiers, loudspeakers, headphones, etc.).

6. Operating system (1, 10, 15) according to one of the preceding claims, **characterized in that** the presentation manager (7) is constructed for selecting the information intended for conveyance in dependence on the user status information.

7. Operating system (1, 10, 15) according to one of the preceding claims, **characterized in that** the presentation manager is constructed for driving the output device and/or the further output device for outputting the information to be conveyed in dependence on the user status information.

8. Operating system (1, 10, 15) according to one of the preceding claims, **characterized in that** the user status information comprises an operating intention and a graphic representation of the information occurs adapted in such a manner that the information linked to operating intention is represented for an improved perceptibility (larger; more central, emphasized (by means of coloured marking, emboldening etc.)).

9. Operating system (1, 10, 15) according to one of the preceding claims, **characterized in that** the conveyance of the information takes place with regard to its volume and/or its output time in dependence on the user status information.

10. Operating system (1, 10, 15) according to one of the preceding claims, **characterized in that** the communication manager (12) additionally includes in an evaluation a usage context which, in particular, is acquired by means of signals from environmental sensors.

11. Method for operating components and/or functions in a motor vehicle, comprising the steps:
acquiring actuating actions of users of the motor vehicle and deriving associated operating actions by means of a number of differently modal acquisition devices (2-2"'),
deriving and generating control commands, allocated to operating actions, and information contents which are intended for an output via the at least one output device, by means of an information manager (6) and outputting the information contents to the users by means of at least one output device,
**characterized in that**
additionally, by means of a communication interpreter (12), from the information recorded during the acquisition of the actuating actions, conveyed user status information during the execution of the actuating action, is implicitly immediately derived and evaluated and provided to the information manager.

12. Method according to Claim 11, **characterized in that** at least one multi modal operating action is derived by means of a linkage of explicit operating actions, acquired in different modal manners, to which no or another operating action are allocated individually.

13. Method according to Claim 11 or 12, **characterized in that** the user status information is additionally evaluated by a presentation manager (7) which controls an actual output of the information contents to be conveyed.

14. Method according to Claim 11 or 13, **characterized in that** the actuating actions are acquired by means of haptic operating elements (switches, rotary actuators, rotary resetters, sliding regulators, track balls, joysticks, touch pads, touch screens, etc.), acoustic acquisition and/or evaluating units (microphone, voice recognition, frequency analyser, etc.), (camera-based) eye tracking devices, contactlessly measuring positioning units, 3D positioning units, proximity sensors, driver/co-driver detection systems and/or gesture detection devices.

15. Method according to one of Claims 11 to 14, **characterized in that** the information to be conveyed is output via the output device and/or a further output device in dependence on the user information, wherein the output device and/or a further output device comprise warning lamps, sirens, horns, haptic vibrators, freely programmable display areas and/or audio output systems (amplifiers, loudspeakers, headphones etc.).

16. Method according to one of Claims 11 to 15, **characterized in that** the presentation manager (7) selects the information intended for conveyance in dependence on the user status information.

17. Method according to one of Claims 11 to 16, **characterized in that** the presentation manager (7) drives the output device and/or the further output device for outputting the information to be conveyed in dependence on the user status information.

18. Method according to one of Claims 11 to 17, **characterized in that** the communication manager (12) determines an operating intention and feeds it to the user status information, and an output of the information to be conveyed, particularly a graphic representation of the information, is adapted by the presentation manager (7) in such a manner that the information linked to operating intention is output, particularly represented (larger, more central, emphasized (by means of coloured marking, emboldening etc.)) for an improved perception.

19. Method according to one of Claims 11 to 18, **characterized in that** the presentation manager (7) controls the conveyance of the information with regard to its volume and/or its output time in dependence on the user status information.

20. Method according to one of Claims 11 to 19, **characterized in that** the communication manager additionally includes in an evaluation a usage context which, in particular, is acquired by means of signals from environmental sensors.

## Revendications

1. Système de conduite (1, 10, 15) pour un véhicule automobile comprenant :
plusieurs dispositifs de détection (2-2''') modaux différents pour détecter des manipulations d'actionnement (4, 5, 11, 16) par au moins un utilisateur du véhicule automobile et dériver les manipulations de conduite associées,
au moins un dispositif de diffusion pour diffuser des informations à l'utilisateur,
un dispositif de commande combiné avec les dispositifs de détection (2-2''') et l'au moins un dispositif de diffusion, lequel comprend un gestionnaire d'informations (6) pour dériver et générer des instructions de commande et des contenus d'information associés aux manipulations de conduite, lesquels sont prévus pour être diffusés par le biais de l'au moins un dispositif de diffusion,
**caractérisé en ce**
**qu'**il est en plus prévu un interpréteur de communication (12) qui, à partir des informations collectées lors de la détection des manipulations d'actionnement, dérive et interprète implicitement les informations d'état d'utilisateur communiquées immédiatement lors de l'exécution de la manipulation d'actionnement et les délivre au gestionnaire d'informations.

2. Système de conduite (1, 10, 15) selon la revendication 1, **caractérisé en ce que** le dispositif de commande comprend un gestionnaire de modalités (18) destiné à dériver au moins une manipulation de conduite multimodale au moyen d'une combinaison de différentes manipulations de conduite explicites détectées de manière modale auxquelles n'est associée individuellement ni aucune ni une autre manipulation de conduite.

3. Système de conduite (1, 10, 15) selon la revendication 1 ou 2, **caractérisé en ce que** le dispositif de commande comprend en plus un gestionnaire de présentation (7) pour commander la diffusion concrète des informations à communiquer en fonction des informations d'état d'utilisateur.

4. Système de conduite (1, 10, 15) selon l'une des revendications précédentes, **caractérisé en ce que** les plusieurs dispositifs de détection (2, 2', 2", 2"') comprennent des éléments de conduite haptiques (interrupteurs, boutons, boutons-poussoirs, curseurs de réglage, trackballs, manettes de commande, pavés tactiles, écran tactile, etc.), des unités de détection et/ou d'interprétation acoustiques (microphone, reconnaissance vocale, analyseur de fréquence, etc.), des dispositifs de suivi du regard (à base d'une caméra), des unités de détermination de la position sans contact, de préférence une unité de détermination de la position 3D, des détecteurs de proximité, des systèmes de reconnaissance du conducteur/passager et/ou des dispositifs de reconnaissance des gestes.

5. Système de conduite (1, 10, 15) selon l'une des revendications précédentes, **caractérisé en ce qu'**il est prévu au moins un dispositif de diffusion supplémentaire et le dispositif de diffusion et/ou le dispositif de diffusion supplémentaire comprennent des témoins lumineux d'avertissement, des sirènes, des klaxons, des vibrateurs haptiques, des surfaces d'affichage programmables à volonté et/ou des systèmes de diffusion audio (amplificateur, haut-parleur, écouteur, etc.).

6. Système de conduite (1, 10, 15) selon l'une des revendications précédentes, **caractérisé en ce que** le gestionnaire de présentation (7) est configuré pour sélectionner l'information prévue pour la communication en fonction des informations d'état d'utilisateur.

7. Système de conduite (1, 10, 15) selon l'une des revendications précédentes, **caractérisé en ce que** le gestionnaire de présentation est configuré pour commander le dispositif de diffusion et/ou le dispositif de diffusion supplémentaire en fonction de l'information d'état d'utilisateur pour la diffusion des informations à communiquer.

8. Système de conduite (1, 10, 15) selon l'une des revendications précédentes, **caractérisé en ce que** les informations d'état d'utilisateur comprennent une intention de conduite et une représentation graphique adaptée des informations est effectuée de telle sorte que les informations combinées avec l'intention de conduite sont représentées pour une meilleure perceptibilité (mise en valeur accentuée au centre (par marquage en couleur, écriture en gras, etc.)).

9. Système de conduite (1, 10, 15) selon l'une des revendications précédentes, **caractérisé en ce que** la communication des informations, du point de vue de leur contenu et/ou de leur instant de diffusion, s'effectue en fonction des informations d'état d'utilisateur.

10. Système de conduite (1, 10, 15) selon l'une des revendications précédentes, **caractérisé en ce que** le gestionnaire de communication (12) fait en plus intervenir dans une interprétation un contexte d'utilisation qui est détecté notamment au moyen de signaux de capteurs d'environnement.

11. Procédé de conduite de composants et/ou de fonctions dans un véhicule automobile comprenant les étapes suivantes :
détection de manipulations d'actionnement des utilisateurs du véhicule automobile et dérivée des manipulations de conduite associées au moyen de plusieurs dispositifs de détection (2-2''') modaux différents,
dérivée et génération d'instructions de commande et de contenus d'information associés aux manipulations de conduite, lesquels sont prévus pour être diffusés par le biais de l'au moins un dispositif de diffusion, au moyen d'un gestionnaire d'informations (6) et
diffusion des contenus d'information à l'utilisateur au moyen d'au moins un dispositif de diffusion,
**caractérisé en ce que**
les informations d'état d'utilisateur communiquées immédiatement lors de l'exécution de la manipulation d'actionnement sont dérivées et interprétées implicitement au moyen d'un interpréteur de communication (12) à partir des informations collectées lors de la détection des manipulations d'actionnement, et sont délivrées au gestionnaire d'informations.

12. Procédé selon la revendication 11, **caractérisé en ce qu'**au moins une manipulation de conduite multimodale est dérivée au moyen d'une combinaison de différentes manipulations de conduite explicites détectées de manière modale auxquelles n'est associée individuellement ni aucune ni une autre manipulation de conduite.

13. Procédé selon la revendication 11 ou 12, **caractérisé en ce que** les informations d'état d'utilisateur sont en plus interprétées par un gestionnaire de présentation (7), lequel commande une diffusion concrète des contenus d'information à communiquer.

14. Procédé selon la revendication 11 ou 13, **caractérisé en ce que** les manipulations d'actionnement sont détectées au moyen d'éléments de conduite haptiques (interrupteurs, boutons, boutons-poussoirs, curseurs de réglage, trackballs, manettes de commande, pavés tactiles, écran tactile, etc.), d'unités de détection et/ou d'interprétation acoustiques (microphone, reconnaissance vocale, analyseur de fréquence, etc.), de dispositifs de suivi du regard (à base d'une caméra), d'unités de détermination de la position à mesure sans contact, d'unités de détermination de la position 3D, de détecteurs de proximité, de systèmes de reconnaissance du conducteur/passager et/ou de dispositifs de reconnaissance des gestes.

15. Procédé selon l'une des revendications 11 à 14, **caractérisé en ce que** les informations à communiquer sont diffusées par le biais du dispositif de diffusion et/ou d'un dispositif de diffusion supplémentaire en fonction des informations d'utilisateur, le dispositif de diffusion et/ou le dispositif de diffusion supplémentaire comprenant des témoins lumineux d'avertissement, des sirènes, des klaxons, des vibrateurs haptiques, des surfaces d'affichage programmables à volonté et/ou des systèmes de diffusion audio (amplificateur, haut-parleur, écouteur, etc.).

16. Procédé selon l'une des revendications 11 à 15, **caractérisé en ce que** le gestionnaire de présentation (7) sélectionne l'information prévue pour la communication en fonction des informations d'état d'utilisateur.

17. Procédé selon l'une des revendications 11 à 16, **caractérisé en ce que** le gestionnaire de présentation (7) commande le dispositif de diffusion et/ou le dispositif de diffusion supplémentaire en fonction de l'information d'état d'utilisateur pour la diffusion des informations à communiquer.

18. Procédé selon l'une des revendications 11 à 17, **caractérisé en ce que** le gestionnaire de communication (12) détermine une intention de conduite et l'ajoute aux informations d'état d'utilisateur et une diffusion des informations à communiquer, notamment une représentation graphique des informations est adaptée par le gestionnaire de présentation (7) de telle sorte que les informations combinées avec l'intention de conduite sont représentées de manière particulière pour une meilleure perceptibilité (mise en valeur accentuée au centre (par marquage en couleur, écriture en gras, etc.)).

19. Procédé selon l'une des revendications 11 à 18, **caractérisé en ce que** le gestionnaire de présentation (7) commande la communication des informations, du point de vue de leur contenu et/ou de leur instant de diffusion, en fonction des informations d'état d'utilisateur.

20. Procédé selon l'une des revendications 11 à 19, **caractérisé en ce que** le gestionnaire de communication fait en plus intervenir dans une interprétation un contexte d'utilisation qui est détecté notamment au moyen de signaux de capteurs d'environnement.
